# EUROPEAN PATENT SPECIFICATION

(11) **EP 4 055 703 B1**
(45) Date of publication and mention of the grant of the patent: **25.11.2026**
(21) Application number: 20884454.8
(22) Date of filing: 29.10.2020
(51) Int. Cl.: H02M 3/07, H02M 7/483, H02M 1/36

(54) **MULTI-LEVEL CONVERTER WITH VOLTAGE DIVIDER FOR PRE-CHARGING FLYING CAPACITOR**
MEHRPEGELWANDLER MIT SPANNUNGSTEILER ZUM VORLADEN EINES FREI SCHWEBENDEN KONDENSATORS
CONVERTISSEUR MULTI-NIVEAUX AVEC RÉDUCTEUR DE TENSION POUR CONDENSATEUR FLOTTANT DE PRÉCHARGE

(30) Priority: 06.11.2019 US 201962931406 P
(43) Date of publication of application: 14.09.2022
(73) Proprietor: Efficient Power Conversion Corporation, El Segundo, CA 90245 (US)
(72) Inventor: ZHANG, Yuanzhe, Torrance, CA 90504 (US); DE ROOIJ, Michael A., Playa Vista, CA 90094 (US); WANG, Jianjing, Mountain View, CA 94043-4827 (US)
(74) Representative: Ehrner & Delmar Patentbyrå AB
(86) International application number: PCT/US2020/057956
(87) International publication number: WO 2021/091765

(56) References cited:
- EP-A2- 2 930 839
- CN-A- 108 712 073
- US-A- 1 282 934
- US-A1- 2015 318 788
- US-A1- 2018 006 559
- US-A1- 2019 058 416
- US-B2- 9 318 974
- HALAMICEK MICHAEL ET AL: "Capacitive Divider Based Passive Start-up Methods for Flying Capacitor Step-down DC-DC Converter Topologies", 2018 INTERNATIONAL POWER ELECTRONICS CONFERENCE (IPEC-NIIGATA 2018 -ECCE ASIA), IEEJ INDUSTRY APPLICATION SOCIETY, 20 May 2018 (2018-05-20), pages 831 - 837, XP033426637, DOI: 10.23919/IPEC.2018.8507919

## Description

### BACKGROUND

### 1. Field of the Invention

The present invention relates generally to systems and methods of pre-charging a flying capacitor for multi-level converters, and more particularly to a multi-level converter for pre-charging a flying capacitor at start-up.

### 2. Description of the Related Art

In typical N-level converters and during steady state operation, it is relatively easy to maintain a voltage approximately 1/(N-1) of the input voltage across a flying capacitor. However, during start-up, the flying capacitor must be pre-charged before the multi-level converter can operate in a steady state. Until the positive terminal of the flying capacitor is charged to the desired voltage, the multi-level converter may experience faults and other kinds of failures. Many multi-level converters include independent charging circuitry to pre-charge the flying capacitor during start -up to achieve the desired voltage. The additional charging circuitry increases the circuit complexity and area of the multi-level converter in an integrated circuit. In addition, the independent charging circuitry complicates control of the multi-level converter.

### SUMMARY OF THE INVENTION

The present invention addresses the disadvantages of circuit and control complexity and large area associated with independent charging circuits for pre-charging flying capacitors in conventional multi-level converters discussed above, by providing a resistive voltage divider for pre-charging the flying capacitor. The present invention, as described herein, comprises a multi-level converter with a resistive voltage divider configured to pre-charge a flying capacitor during an initial charging phase. Once the flying capacitor is charged to the appropriate voltage, the multi-level converter transitions to a normal operating mode. The resistive voltage divider only comprises passive components which occupy less area than an independent charging circuit. In addition, the passive components simplify control of the multi-level converter compared to incorporation of an independent charging circuit into the multi-level converter.

The multi-level converter is an N-level converter and comprises N-1 upper transistors and N-1 lower transistors, N-2 flying capacitors, and N-2 resistive voltage dividers. The upper transistors are connected in series with each other and with the lower transistors, which are also connected in series with each other. Each flying capacitor is connected across one or more of the upper transistors and one or more of the lower transistors. Each resistive voltage divider is directly connected to one of the flying capacitors and is configured to charge the respective flying capacitor during an initial charging phase of operation.

Each resistive voltage divider comprises a first resistor and a second resistor. The ratio of the resistance of the first resistor to the resistance of the second resistor is chosen based on a desired voltage on the positive terminal of the flying capacitor. The resistances of both resistors are chosen to adjust the charging speed of the flying capacitor. A controller enables a charging path from the resistive voltage divider through the flying capacitor to a ground node during the initial charging phase of operation and monitor the voltage on the positive terminal of the flying capacitor. More in detail, during the initial charging mode, a lower level transistor connected between the flying capacitor and ground is turned on to provide a charging path from an input node through the resistive voltage divider and the flying capacitor to ground through the lower level transistor. In response to the voltage on the positive terminal of the flying capacitor satisfying a voltage criterion, the controller may transition the multi-level converter from the initial charging phase of operation to a steady state phase of operation.

The above and other preferred features described herein, including various novel details of implementation and combination of elements, will now be more particularly described with reference to the accompanying drawings and pointed out in the claims. It should be understood that the particular methods and apparatuses are shown by way of illustration only and not as limitations of the claims. As will be understood by those skilled in the art, the principles and features of the teachings herein may be employed in various and numerous embodiments without departing from the scope of the claims. The scope of protection of the present application is set out in the appended independent apparatus claims 1 and 7. Preferred embodiments are defined in the dependent claims.

CN 108 712 073 A discloses three-level DC-DC converter where an active circuit provides for charging of a flying capacitor.

US 2019/058416 A1 discloses a five level converter comprising three flying capacitors. US 2018/006559 discloses a multilevel converter.

### BRIEF DESCRIPTION OF THE DRAWINGS

The features, objects, and advantages of the present disclosure will become more apparent from the detailed description set forth below when taken in conjunction with the drawings in which like reference characters identify correspondingly throughout and wherein:
FIG. 1 illustrates a schematic of a three-level converter with a flying capacitor according to an exemplary embodiment of the present invention.
FIG. 2 illustrates a schematic of a four-level converter with two flying capacitors according to an exemplary embodiment of the present invention.
FIG. 3 illustrates a schematic of a hybrid converter with a flying capacitor according to an exemplary embodiment of the present invention.

### DETAILED DESCRIPTION OF THE PREFERRED EMBODIMENTS

In the following detailed description, reference is made to certain embodiments. These embodiments are described with sufficient detail to enable those skilled in the art to practice them. It is to be understood that other embodiments may be employed and that various structural, logical, and electrical changes may be made. The combinations of features disclosed in the following detailed description may not be necessary to practice the teachings in the broadest sense, and are instead taught merely to describe particularly representative examples of the present teachings.

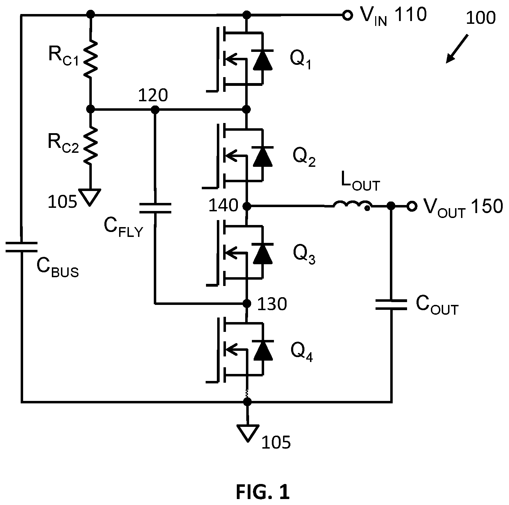

FIG. 1 illustrates a schematic of a three-level converter 100 with a flying capacitor C_{FLY} according to an exemplary embodiment of the present invention. The three-level converter 100 includes two upper transistors Q1, Q2 and two lower transistors Q3, Q4, capacitors C_{FLY}, C_{BUS}, and C_{OUT}, resistors R_{C1} and R_{C2}, and inductor L_{OUT}. Transistors Q1-Q4 comprise n-type field effect transistors (FETs). In some implementations, transistors Q1-Q4 are gallium nitride (GaN) FETs, metal oxide semiconductor (MOS) FETs, bipolar junction transistors (BJTs), or any appropriate type or combination of transistors.

The upper level transistors Q1, Q2 are connected in series with each other, and are connected in series with the lower level transistors, Q3, Q4, which are also connected in series with each other. The drain terminal of Q1 is connected to an input node 110 configured to receive V_{IN}, and the source terminal of Q4 is connected to ground 105. Capacitor C_{BUS} is connected to the input node 110 and to ground 105. Capacitor C_{FLY} is connected between Q1 and Q2 at node 120 and between Q3 and Q4 at node 130.

Resistor R_{C1} is connected to the input node 110 and to capacitor C_{FLY} and between transistors Q1 and Q2 at node 120. Resistor R_{C2} is connected to capacitor C_{FLY} and between transistors Q1 and Q2 at node 120 and to ground 105. Resistor R_{C1} works in tandem with resistor R_{C2} to act as a resistive voltage divider. The ratio of resistor R_{C1} to resistor R_{C2} is used to determine a voltage at the node 120 and the positive terminal of capacitor C_{FLY}. Inductor L_{OUT} is connected between transistors Q2 and Q3 at node 140 and to output node 150 configured to provide V_{OUT}. Capacitor C_{OUT} is connected to output node 150 and to ground 105.

In response to being powered on, three-level converter 100 operates in an initial charging mode of operation in which the capacitor C_{FLY} is charged. During the initial charging mode, transistor Q4 is turned on to provide a charging path for capacitor C_{FLY} from the input node 110, through the resistive voltage divider of R_{C1} and R_{C2}, to capacitor C_{FLY} before reaching ground 105 through transistor Q4. A ratio of the resistance of R_{C1} to the resistance of R_{C2} is chosen based on the expected input voltage V_{IN} such that the capacitor C_{FLY} is charged until a voltage at the node 120 and the positive terminal of capacitor C_{FLY} is approximately half the input voltage V_{IN} or slightly greater than half the input voltage V_{IN} to accommodate leakage from transistors Q1-Q4. The value of the resistances is also chosen to control a charging current to capacitor C_{FLY} and the length of time needed to charge it. Once the capacitor C_{FLY} is charged, three-level converter 100 transitions to a normal operating mode, and the voltage on the positive terminal of capacitor C_{FLY} is maintained at approximately half the input voltage V_{IN}.

In contrast to conventional multi-level converters which use an independent power system to charge capacitor C_{FLY} before steady state operation, the three-level converter 100 uses passive components in the resistive voltage divider which occupy a much smaller area than an independent charging system. In addition, resistors R_{C1} and R_{C2} do not add complexity to control of three-level converter 100. In some embodiments, the resistor R_{C2} is already included in a conventional three-level converter as a voltage-sensing resistor to provide voltage information to a controller, such that the only added component included to make a resistive voltage divider for charging the flying capacitor is the resistor R_{C1}.

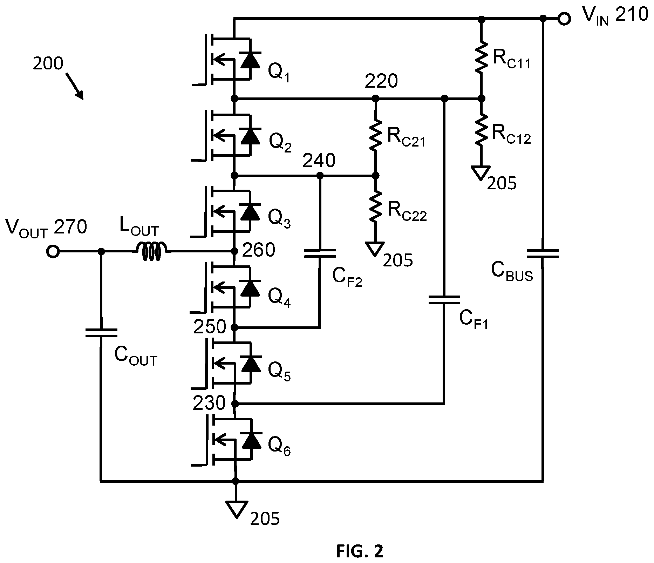

The resistive voltage divider used to charge the flying capacitor can be extended from a three-level converter to other multi-level converters and to multi-level inverters. An N-level flying capacitor multi-level converter includes (N-1) upper transistors and (N-1) lower transistors, (N-2) flying capacitors, and (N-2) resistive voltage dividers. FIG. 2 illustrates a schematic of a four-level converter 200 with two flying capacitors C_{F1} and C_{F2} according to an exemplary embodiment of the present invention.

The four-level converter 200 of Fig. 2 is similar to three-level converter 100 shown in FIG. 1, but includes additional transistors Q5 and Q6, an additional flying capacitor C_{F2}, and an additional resistive voltage divider including resistors R_{C21} and R_{C22}. Similar to three-level converter 100, four-level converter 200 uses passive components R_{C11} and R_{C12} in the first resistive voltage divider and R_{C21} and R_{C22} in the second resistive voltage divider to charge the flying capacitors C_{F1} and C_{F2} and reduce power consumption compared to an independent power system.

Transistors Q1-Q6 comprise n-type FETs and are connected together in series. The drain terminal of Q1 is connected to an input node 210 configured to receive V_{IN}, and the source terminal of Q6 is connected to ground 205. Capacitor C_{BUS} is connected to the input node 210 and to ground 205. Capacitor C_{F1} is connected between Q1 and Q2 at node 220 and between Q5 and Q6 at node 230. Resistor R_{C11} is connected to the input node 210 and to capacitor C_{F1} and between transistors Q1 and Q2 at node 220. Resistor R_{C12} is connected to capacitor C_{F1} and between transistors Q1 and Q2 at node 220 and to ground 205. Resistor R_{C11} works in tandem with resistor R_{C12} as a resistive voltage divider to charge the first flying capacitor C_{F1}.

Capacitor C_{F2} is connected between Q2 and Q3 at node 240 and between Q4 and Q5 at node 250. Resistor R_{C21} is connected to node 220 and to capacitor C_{F2} at node 240. Resistor R_{C22} is connected to capacitor C_{F2} at node 240 and to ground 205. Resistor R_{C21} works in tandem with resistor R_{C22} as a resistive voltage divider to charge the second flying capacitor C_{F2}. Inductor L_{OUT} is connected between transistors Q3 and Q4 at node 260 and to output node 270 configured to provide V_{OUT}. Capacitor C_{OUT} is connected to output node 270 and to ground 205.

In response to being powered on, four-level converter 200 operates in an initial charging mode of operation in which the flying capacitors C_{F1} and C_{F2} are charged. During the initial charging mode, transistor Q6 is turned on to provide a charging path for capacitor C_{F1} from the input node 210, through the resistive voltage divider of R_{C11} and R_{C12}, to capacitor C_{F1} before reaching ground 205. Capacitor C_{F1} is charged until a voltage at the node 220 and the positive terminal of capacitor C_{F1} is approximately two-thirds of the input voltage V_{IN} or slightly greater than two-thirds of the input voltage V_{IN} to accommodate leakage from transistors Q1-Q6.

Once the capacitor C_{F1} is charged or while the capacitor C_{F1} is charging, transistor Q5 is turned on to provide a charging path for capacitor C_{F2} from the input node 210, through the first resistive voltage divider of R_{C11} and R_{C12}, through the second resistive voltage divider of R_{C21} and R_{C22}, to capacitor C_{F2} before reaching ground 205 through transistors Q5 and Q6. Capacitor C_{F2} is charged until a voltage at the node 240 and the positive terminal of capacitor C_{F2} is approximately one third of the voltage at node 220 or slightly greater than one third of the voltage at node 220 to accommodate leakage from transistors Q1-Q6. Once the capacitor C_{F2} is charged, four-level converter 200 transitions to a normal operating mode, and the voltage on the positive terminal of capacitor C_{F1} and the voltage on the positive terminal of capacitor C_{F2} are maintained at their respective values.

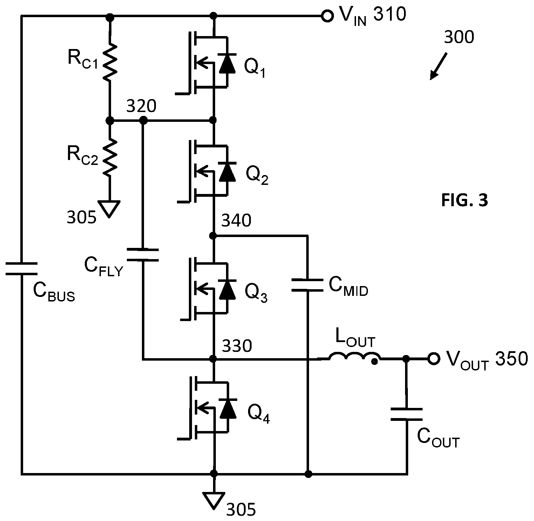

In addition to multilevel converters with three or more levels, the resistive voltage divider used to charge the flying capacitor can be extended to hybrid converters combining multilevel converters with other types of converters such as buck-boost converters, bootstrap converters, and the like. FIG. 3 illustrates a schematic of a hybrid converter 300 combining a converter and a synchronous buck according to an exemplary embodiment of the present invention. Hybrid converter 300 is similar to three-level converter 100 shown in FIG. 1, but also includes a capacitor C_{MID} connected between transistors Q2 and Q3 at node 340. In addition, the inductor L_{OUT} is connected between transistors Q3 and Q4 at node 330, rather than at node 340. Hybrid converter 300 includes the resistive voltage divider of resistors R_{C1} and R_{C2} which charges capacitor C_{FLY} through transistor Q4 during an initial charging phase.

The above description and drawings are only to be considered illustrative of specific embodiments, which achieve the features and advantages described herein. The embodiments of the invention are limited by the following claims.

## Claims

1. A three-level flying capacitor multi-level converter (100; 300) configured to convert an input voltage into an output voltage, comprising:
two upper level transistors (Q1, Q2) connected in electrical series with a node (120) therebetween;
two lower level transistors (Q3, Q4), wherein the two upper level transistors (Q1, Q2) and the two lower level transistors (Q3, Q4) are connected together in electrical series between the input voltage (V_{IN}) and ground (105),
a flying capacitor (C_{FLY}) connected to the node (120) between the two upper level transistors (Q1, Q2); and
a resistive voltage divider configured to pre-charge the flying capacitor (C_{FLY}) during an initial charging mode of operation until the voltage at the node is approximately half, or slightly is greater than half, of the input voltage, wherein the resistive voltage divider consists of a first resistor (R_{C1}) and a second resistor (R_{C2}) connected in electrical series between the input voltage and ground, with a node therebetween,
**characterized in**
the resistive voltage divider using only passive components and the node between the first resistor (R_{C1}) and the second resistor (R_{C2}) being directly connected to the flying capacitor (C_{FLY}) and to the node (120) between the two upper level transistors (Q1, Q2),
wherein during the initial charging mode, the lower level transistor (Q4) connected between the flying capacitor (C_{FLY}) and ground (105) is turned on to provide a charging path from an input node (110) through the resistive voltage divider (R_{C1}) and the flying capacitor (C_{FLY}) to ground (105) through the lower level transistor (Q4).

2. The multi-level converter (100; 200; 300) of claim 1, wherein a ratio of a resistance of the first resistor (R_{C1}) to a resistance of the second resistor (R_{C2}) is chosen based on a desired voltage on a positive terminal of the flying capacitor (C_{FLY}).

3. The multi-level converter (100; 200; 300) of claim 1, wherein a resistance of the first resistor (R_{C1}) and a resistance of the second resistor (R_{C2}) are chosen to control a charging speed of the flying capacitor (C_{FLY}).

4. The multi-level converter (100; 200; 300) of claim 1, wherein the multi-level converter comprises the second resistor (R_{C2}) to sense a voltage on a positive terminal of the flying capacitor (C_{FLY}) for controlling the multi-level converter.

5. The multi-level converter (100; 200; 300) of claim 1, further comprising a controller, wherein during the initial charging mode of operation, the controller is configured to enable the charging path from the resistive voltage divider through the flying capacitor to a ground node.

6. The multi-level converter (100; 200; 300) of claim 5, wherein the controller is further configured to cause the multi-level converter to transition from the initial charging mode of operation to a normal mode of operation when the voltage across the flying capacitor satisfies a voltage criterion.

7. An N-level flying capacitor multi-level converter configured to convert an input voltage into an output voltage, comprising:
N-1 upper transistors connected in series (Q1-Q3), with a node (220, 240) between each of the upper transistors (Q1-Q3);
N-1 lower transistors (Q4-Q6) connected in series, wherein the N-1 lower transistors (Q4-Q6) are connected in series with the N-1 upper transistors (Q1-Q3) between an input voltage (210) and ground (205);
N-2 flying capacitors (C_{F1}, C_{F2}), each flying capacitor (C_{F1}, C_{F2}) connected to one of the nodes between each of the upper transistors (Q1-Q3); and
N-2 resistive voltage dividers, each voltage divider being configured to pre-charge one of the flying capacitors (C_{F1}, C_{F2}), each resistive voltage divider consisting of a first resistor (R_{C11}, R_{C21}) and a second resistor (R_{C12}, R_{C22}) connected in electrical series between the input voltage and ground with a node therebetween,
**characterized in**
the N-2 resistive voltage dividers using only passive components and the node between the first resistor (R_{C11}, R_{C21}) and the second resistor (R_{C12}, R_{C22}) being directly connected to the one of the flying capacitors (C_{F1}, C_{F2}) and to the one of the nodes between the upper transistors connected to the one of the flying capacitors (C_{F1}, C_{F2}), wherein during the initial charging mode, the lower level transistors (Q5, Q6) connected between the flying capacitors (C_{F1}, C_{F2}) and ground are turned on to provide a charging path from an input node (210) through the resistive voltage dividers (R_{C11}, R_{C21}) and the flying capacitors (C_{F1}, C_{F2}) to ground through the lower level transistors (Q5, Q6).

## Patentansprüche

1. Dreistufen-Schwebekondensator-Mehrstufen-Umrichter (100; 300), der dazu ausgelegt ist, eine Eingangsspannung in eine Ausgangsspannung umzuwandeln, Folgendes umfassend:
zwei Transistoren der oberen Ebene (Q1, Q2), die mit einem Knoten (120) dazwischen in elektrischer Reihe geschaltet sind;
zwei Transistoren der niedrigeren Ebene (Q3, Q4), wobei die zwei Transistoren der oberen Ebene (Q1, Q2) und die zwei Transistoren der niedrigeren Ebene (Q3, Q4) in elektrischer Reihe zwischen der Eingangsspannung (V_{IN}) und Masse (105) miteinander verbunden sind,
einen Schwebekondensator (C_{FLY}), der mit dem Knoten (120) zwischen den zwei Transistoren der oberen Ebene (Q1, Q2) verbunden ist; und
einen Widerstands-Spannungsteiler, der dazu ausgelegt ist, den Schwebekondensator (C_{FLY}) während eines anfänglichen Ladebetriebsmodus vorzuladen, bis die Spannung an dem Knoten ungefähr die Hälfte oder geringfügig größer als die Hälfte der Eingangsspannung ist, wobei der Widerstands-Spannungsteiler aus einem ersten Widerstand (R_{C1}) und einem zweiten Widerstand (R_{C2}) besteht, die in elektrischer Reihe zwischen der Eingangsspannung und Masse geschaltet sind, wobei ein Knoten dazwischen liegt,
**dadurch gekennzeichnet, dass**
der Widerstands-Spannungsteiler nur passive Komponenten verwendet und der Knoten zwischen dem ersten Widerstand (R_{C1}) und dem zweiten Widerstand (R_{C2}) direkt mit dem Schwebekondensator (C_{FLY}) und mit dem Knoten (120) zwischen den zwei Transistoren der oberen Ebene (Q1, Q2) verbunden ist,
wobei während des anfänglichen Lademodus der Transistor der niedrigeren Ebene (Q4), der zwischen den Schwebekondensator (C_{FLY}) und Masse (105) geschaltet ist,
eingeschaltet wird, um einen Ladepfad von einem Eingangsknoten (110) durch den Widerstands-Spannungsteiler (R_{C1}) und den Schwebekondensator (C_{FLY}) zu Masse (105) durch den Transistor der niedrigeren Ebene (Q4) bereitzustellen.

2. Mehrstufen-Umrichter (100; 200; 300) nach Anspruch 1, wobei ein Verhältnis eines ohmschen Widerstands des ersten Widerstands (R_{C1}) zu einem ohmschen Widerstand des zweiten Widerstands (R_{C2}) basierend auf einer gewünschten Spannung an einem positiven Anschluss des Schwebekondensators (C_{FLY}) ausgewählt wird.

3. Mehrstufen-Umrichter (100; 200; 300) nach Anspruch 1, wobei ein ohmscher Widerstand des ersten Widerstands (R_{C1}) und ein ohmscher Widerstand des zweiten Widerstands (R_{C2}) ausgewählt sind, um eine Ladegeschwindigkeit des Schwebekondensators (C_{FLY}) zu steuern.

4. Mehrstufen-Umrichter (100; 200; 300) nach Anspruch 1, wobei der Mehrstufen-Umrichter den zweiten Widerstand (R_{C2}) umfasst, um eine Spannung an einem positiven Anschluss des Schwebekondensators (C_{FLY}) zum Steuern des Mehrstufen-Umrichters zu erfassen.

5. Mehrstufen-Umrichter (100; 200; 300) nach Anspruch 1, der ferner einen Controller umfasst, wobei der Controller während des anfänglichen Ladebetriebsmodus dazu ausgelegt ist, den Ladepfad von dem Widerstands-Spannungsteiler durch den Schwebekondensator zu einem Masseknoten zu ermöglichen.

6. Mehrstufen-Umrichter (100; 200; 300) nach Anspruch 5, wobei der Controller ferner dazu ausgelegt ist, zu bewirken, dass der Mehrstufen-Umrichter von dem anfänglichen Ladebetriebsmodus in einen normalen Betriebsmodus übergeht, wenn die Spannung an dem Schwebekondensator ein Spannungskriterium erfüllt.

7. N-Stufen-Schwebekondensator-Mehrstufen-Umrichter, der dazu ausgelegt ist, eine Eingangsspannung in eine Ausgangsspannung umzuwandeln, Folgendes umfassend:
N-1 obere Transistoren, die in Reihe geschaltet sind (Q1-Q3), mit einem Knoten (220, 240) zwischen jedem der oberen Transistoren (Q1-Q3);
N-1 untere Transistoren (Q4-Q6), die in Reihe geschaltet sind, wobei die N-1 unteren Transistoren (Q4-Q6) in Reihe mit den N-1 oberen Transistoren (Q1-Q3) zwischen einer Eingangsspannung (210) und Masse (205) geschaltet sind; N-2-Schwebekondensatoren (C_{F1}, C_{F2}), wobei jeder Schwebekondensator (C_{F1}, C_{F2}) mit einem der Knoten zwischen jedem der oberen Transistoren (Q1-Q3) verbunden ist; und
N-2-Widerstands-Spannungsteiler, wobei jeder Spannungsteiler dazu ausgelegt ist, einen der Schwebekondensatoren (C_{F1}, C_{F2}) vorzuladen, wobei jeder Widerstands-Spannungsteiler aus einem ersten Widerstand (R_{C11}, R_{C21}) und einem zweiten Widerstand (R_{C12}, R_{C22}) besteht, die in elektrischer Reihe zwischen der Eingangsspannung und Masse mit einem Knoten dazwischen verbunden sind,
**dadurch gekennzeichnet, dass**
die N-2-Widerstands-Spannungsteiler, die ausschließlich passive Komponenten verwenden, wobei der Knoten zwischen dem ersten Widerstand (R_{C11}, R_{C21}) und dem zweiten Widerstand (R_{C12}, R_{C22}) direkt mit einem der Schwebekondensatoren (C_{F1}, C_{F2}) sowie mit einem der Knoten zwischen den oberen Transistoren verbunden ist, die mit einem der Schwebekondensatoren (C_{F1}, C_{F2}) verbunden sind, wobei während des anfänglichen Lademodus die Transistoren mit niedrigerem Pegel (Q5, Q6), die zwischen den Schwebekondensatoren (C_{F1}, C_{F2}) und Masse verbunden sind, eingeschaltet werden, um einen Ladepfad von einem Eingangsknoten (210) über die Widerstands-Spannungsteiler (R_{C11}, R_{C21}) und die Schwebekondensatoren (C_{F1}, C_{F2}) zur Masse bereitzustellen, um eine Erdung durch die Transistoren mit niedrigerem Pegel (Q5, Q6) durchzuführen.

## Revendications

1. Convertisseur multi-niveau à condensateur volant à trois niveaux (100 ; 300) configuré pour convertir une tension d'entrée en une tension de sortie, comprenant :
deux transistors de niveau supérieur (Q1, Q2) connectés en série, électrique avec un nœud (120) entre ceux-ci ; deux transistors de niveau inférieur (Q3, Q4), dans lequel les deux transistors de niveau supérieur (Q1, Q2) et les deux transistors de niveau inférieur (Q3, Q4) sont connectés ensemble en série électrique entre la tension d'entrée (V_{IN}) et la masse (105),
un condensateur volant (C_{FLY}) connecté au nœud (120) entre les deux transistors de niveau supérieur (Q1, Q2) ; et un diviseur de tension résistive configuré pour précharger le condensateur volant (C_{FLY}) durant un mode de charge initial de fonctionnement jusqu'à ce que la tension au niveau du nœud soit approximativement la moitié, ou légèrement supérieure à la moitié, de la tension d'entrée, dans lequel le diviseur de tension résistive est constitué d'une première résistance (R_{C1}) et d'une seconde résistance (R_{C2}) connectées en série électrique entre la tension d'entrée et la masse, avec un nœud entre celles-ci,
**caractérisé en ce que**
le diviseur de tension résistive utilise seulement des composants passifs et le nœud entre la première résistance (R_{C1}) et la seconde résistance (R_{C2}) est directement connecté au condensateur volant (C_{FLY}) et au nœud (120) entre les deux transistors de niveau supérieur (Q1, Q2),
dans lequel, durant le mode de charge initial, le transistor de niveau inférieur (Q4) connecté entre le condensateur volant (C_{FLY}) et la masse (105) est allumé pour fournir un chemin de charge depuis un nœud d'entrée (110) à travers le diviseur de tension résistive (R_{C1}) et le condensateur volant (C_{FLY}) jusqu'à la masse (105) à travers le transistor de niveau inférieur (Q4).

2. Convertisseur multi-niveau (100 ; 200 ; 300) de la revendication 1, dans lequel un rapport d'une résistivité de la première résistance (R_{C1}) relativement à une résistivité de la seconde résistance (R_{C2}) est choisi sur la base d'une tension souhaitée sur une borne positive du condensateur volant (C_{FLY}).

3. Convertisseur multi-niveau (100 ; 200 ; 300) de la revendication 1, dans lequel une résistivité de la première résistance (R_{C1}) et une résistivité de la seconde résistance (R_{C2}) sont choisies pour commander une vitesse de charge du condensateur volant (C_{FLY}).

4. Convertisseur multi-niveau (100 ; 200 ; 300) de la revendication 1, dans lequel le convertisseur multi-niveau comprend la seconde résistance (R_{C2}) pour détecter une tension sur une borne positive du condensateur volant (C_{FLY}) pour commander le convertisseur multi-niveau.

5. Convertisseur multi-niveau (100 ; 200 ; 300) de la revendication 1, comprenant en outre une unité de commande, dans lequel, durant le mode de charge initial de fonctionnement, l'unité de commande est configurée pour permettre le chemin de charge depuis le diviseur de tension résistive à travers le condensateur volant jusqu'à un nœud de masse.

6. Convertisseur multi-niveau (100 ; 200 ; 300) de la revendication 5, dans lequel l'unité de commande est en outre configurée pour amener le convertisseur multi-niveau à passer du mode de charge initial de fonctionnement à un mode normal de fonctionnement lorsque la tension de part et d'autre du condensateur volant satisfait à un critère de tension.

7. Convertisseur multi-niveau à condensateur volant à N niveaux configuré pour convertir une tension d'entrée en une tension de sortie, comprenant :
N-1 résistances supérieures connectées en série (Q1-Q3), avec un nœud (220, 240) entre chacune des résistances supérieures (Q1-Q3) ;
N-1 résistances inférieures (Q4-Q6) connectées en série, dans lequel les N-1 résistances inférieures (Q4-Q6) sont connectées en série avec les N-1 résistances supérieures (Q1-Q3) entre une tension d'entrée (210) et la masse (205) ;
N-2 condensateurs volants (C_{F1}, C_{F2}), chaque condensateur volant (C_{F1}, C_{F2}) étant connecté à un des nœuds entre chacune des résistances supérieures (Q1-Q3) ; et
N-2 diviseurs de tension résistive, chaque diviseur de tension étant configuré pour précharger un des condensateurs volants (C_{F1}, C_{F2}), chaque diviseur de tension résistive étant constitué d'une première résistance (R_{C11}, R_{C21}) et d'une seconde résistance (R_{C12}, R_{C22}) connectées en série électrique entre la tension d'entrée et la masse, avec un nœud entre celles-ci, **caractérisé en ce que**
les N-2 diviseurs de tension résistive utilisent seulement des composants passifs et le nœud entre la première résistance (R_{C11}, R_{C21}) et la seconde résistance (R_{C12}, R_{C22}) est directement connecté à l'un des condensateurs volants (C_{F1}, C_{F2}) et à l'un des nœuds entre les résistances supérieures connectées à l'un des condensateurs volants (C_{F1}, C_{F2}), dans lequel, durant le mode de charge initial, les transistors de niveau inférieur (Q5, Q6) connectés entre les condensateurs volants (C_{F1}, C_{F2}) et la masse sont allumés pour fournir un chemin de charge depuis un nœud d'entrée (210) à travers le diviseurs de tension résistive (R_{C11}, R_{C21}) et les condensateurs volants (C_{F1}, C_{F2}) jusqu'à la masse à travers les transistors de niveau inférieur (Q5, Q6).
